# EUROPEAN PATENT SPECIFICATION

(11) **EP 3 671 421 B1**
(45) Date of publication and mention of the grant of the patent: **29.11.2023**
(21) Application number: 18382938.1
(22) Date of filing: 18.12.2018
(51) Int. Cl.: G06F 3/0488, B60R 1/06, B60K 37/06, G06F 3/0482

(54) **A VEHICLE REAR-VIEW MIRROR ADJUSTMENT CONTROL SYSTEM, A COMPUTER-IMPLEMENTED METHOD AND A COMPUTER PROGRAM, FOR CONTROLLING THE POSITION OF REAR-VIEW MIRRORS ON A VEHICLE**
FAHRZEUGRÜCKSPIEGELVERSTELLUNGSTEUERUNGSSYSTEM, COMPUTERIMPLEMENTIERTES VERFAHREN UND COMPUTERPROGRAMM ZUR STEUERUNG DER POSITION VON RÜCKSPIEGELN AN EINEM FAHRZEUG
SYSTÈME DE COMMANDE DE RÉGLAGE DE RÉTROVISEUR DE VÉHICULE, PROCÉDÉ MIS EN UVRE PAR ORDINATEUR ET PROGRAMME INFORMATIQUE POUR COMMANDER LA POSITION DE RÉTROVISEURS SUR UN VÉHICULE

(43) Date of publication of application: 24.06.2020
(73) Proprietor: Seat, S.A., 08760 Martorell (ES)
(72) Inventor: RODRIGUEZ BOSCH, Ruben, 08760 Martorell (ES); ALCOCER REDONDO, Antonio, 08760 Martorell (ES); GARCÍA PAMPLONA, Jose Antonio, 08760 Martorell (ES)
(74) Representative: Ponti & Partners, S.L.P

(56) References cited:
- WO-A1-2016/200647
- DE-A1-102014 015 403
- US-A1- 2008 168 384
- US-A1- 2016 227 123

## Description

### FIELD OF THE INVENTION

The present invention relates, in a first aspect, to a vehicle rear-view mirror adjustment control system, configured to control the position of rear-view mirrors on a vehicle through a graphical user interface (GUI), minimizing significantly the time that a user must keep looking at the screen of the GUI.

A second aspect of the present invention relates to a computer-implemented method, adapted to operate the system of the first aspect.

A third aspect of the present invention relates to a computer program, adapted to implement the steps of the method of second aspect.

### BACKGROUND OF THE INVENTION

WO2016200647A1 discloses a vehicle rear-view mirror adjustment control system, configured to control the position of rear-view mirrors on a vehicle, comprising the features of the preamble of claim 1, i.e.:
- a computing entity configured to provide control signals to respective actuators of said rear-view mirrors to control the same to rotate about first and second rotation axes; and
- a graphical user interface (GUI) comprising at least one touch screen operatively connected to said computing entity, wherein the control signals provided by the computing entity are generated in response to the detection of a user touching inputs determined by the at least one touch screen;

wherein said GUI is configured to display in a displaying area of the touch screen having Y and X dimensions:
   - a first region displaying touch-enabled icons, wherein each touch-enabled icon is associated to one of said rear-view mirrors, allowing a user to select a rear-view mirror to be controlled; and
   - a second region displaying a rear-view mirror adjustment control screen associated to the selected rear-view mirror;
wherein the GUI is configured to sequentially detect, in collaboration with said computing entity, on the at least one touch screen:
   - a contact on at least one of the touch-enabled icons located on said first region, to select the rear-view mirror to be controlled;
   - an initial contact on a location of said second region; and
   - a pressure exerted according to a drag motion from an origin constituted by said initial contact;
and wherein the computing entity is configured to generate as said control signals rotating control signals, for rotating the selected rear-view mirror about said first and/or second rotation axis according to desired rotation directions, that are determined based on the path and direction followed by said drag motion.

The possible drag motions to be detected in the proposal described by WO2016200647A1 are constrained by a virtual control element displayed on the touch screen in order to guide a user, so that the user has to look at the screen at all times, to be sure that he/she is performing a drag motion according to the displayed virtual control element. Document US 2016/227123 also discloses a rear-view mirror control using a touchpad.

Among others, such virtual control element (a bullseye with or without straight dotted lines) imposes the limitation for the drag motions to have a fixed origin, particularly located at the centre of the virtual control element.

Therefore, a user who wants to control the position of a rear-view mirror of the vehicle must keep looking at the screen at all times, to be sure that he/she is controlling the desired rear-view mirror and according to the drag motion provided by the virtual control element, in order to perform the desired position control, which, if the user is the vehicle's driver, whether forces the driver to perform that control when the vehicle is stopped or, if not, causes the driver to look away from the forward roadway so that the chances of having an accident are increased. The user cannot visually check the position of the rear-view mirror while its position is being controlled, in order to stop the position adjustment at the desired position.

It is, therefore, necessary to provide an alternative to the state of the art which covers the gaps found therein, by providing a vehicle rear-view mirror adjustment control system that is more efficient than those known in the state of the art, specifically by allowing to minimize significantly the time that a user must keep looking at the screen to control the operation of the rear-view mirrors, which can be critical when the user is the vehicle's driver.

### SUMMARY OF THE INVENTION

To that end, the present invention relates, in a first aspect, to a vehicle rear-view mirror adjustment control system, configured to control the position of rear-view mirrors on a vehicle, comprising:
- a computing entity configured to provide control signals to respective actuators of said rear-view mirrors to control the same to rotate about first and second rotation axes; and
- a graphical user interface (GUI) comprising at least one touch screen operatively connected to said computing entity, wherein the control signals provided by the computing entity are generated in response to the detection of a user touching inputs determined by the at least one touch screen;

wherein said GUI is configured to display in a displaying area of the touch screen having Y and X dimensions:
   - a first region displaying touch-enabled icons, wherein each touch-enabled icon is associated to one of said rear-view mirrors, allowing a user to select a rear-view mirror to be controlled; and
   - a second region displaying a rear-view mirror adjustment control screen associated to the selected rear-view mirror;
wherein the GUI is configured to sequentially detect, in collaboration with said computing entity, on the at least one touch screen:
   - a contact on at least one of the touch-enabled icons located on said first region, to select the rear-view mirror to be controlled;
   - an initial contact on a location of said second region; and
   - a pressure exerted according to a drag motion from an origin constituted by said initial contact;
and wherein the computing entity is configured to generate as said control signals rotating control signals, for rotating the selected rear-view mirror about said first and/or second rotation axis according to desired rotation directions, that are determined based on the path and direction followed by said drag motion.

In contrast to the systems known in the prior art, in the one of the first aspect of the present invention, in a characterizing manner, the GUI is configured to detect said initial contact on any location of the second region, so that any location of the second region is a candidate location for being the origin of said drag motion.

For an embodiment, the computing entity is configured to generate as said control signals:
- a first rotating control signal for rotating the selected rear-view mirror about said first rotation axis according to a first rotation direction, when the drag motion of the detected pressure comprises a X component following said X dimension according to a first direction,
- a second rotating control signal for rotating the selected rear-view mirror about said first rotation axis according to a second rotation direction opposite to said first rotation direction, when the drag motion of the detected pressure comprises a X component following said X dimension according to a second direction opposite to said first direction,
- a third rotating control signal for rotating the selected rear-view mirror about said second rotation axis according to a third rotation direction, when the drag motion of the detected pressure comprises a Y component following said Y dimension according to a third direction, and
- a fourth rotating control signal for rotating the selected rear-view mirror about said second rotation axis according to a fourth rotation direction opposite to said third rotation direction, when the drag motion of the detected pressure comprises a Y component following said Y dimension according to a fourth direction opposite to said third direction.

According to an embodiment of the system of the first aspect of the present invention, the first rotation axis is a vertical axis or an axis tilted with respect to a vertical axis, and the second rotation axis is a horizontal axis or an axis tilted with respect to a horizontal axis.

For an embodiment of the system of the first aspect of the present invention, the first and second rotation directions are counterclockwise and clockwise rotation directions, respectively, and the third and fourth rotation directions are counterclockwise and clockwise rotation directions, respectively.

By means of the present invention, in contrast to the prior art proposals where a fixed coordinate axis is used to perform the drag motions, a dynamic coordinate axis is used, which can have as centre any of the above mentioned candidate locations, as it is based on and after each new initial contact made by a user.

Therefore, the user will drag his/her finger on the touch-screen and any instantaneous position of the finger will be referenced to the created coordinate axis. Thus, if the drag motion goes to the right of the initial contact, the selected rear-view mirror moves to the right, i.e. counterclockwise about the first rotation axis (in case the first rotation axis is a vertical axis or an axis tilted with respect to a vertical axis). If the finger then slides to a lower left area, the mirror moves down and left, taking as a reference the same coordinate axis i.e. clockwise about the first rotation axis and also clockwise about the second rotation axis (in case the second rotation axis is a horizontal axis or an axis tilted with respect to a horizontal axis). At every moment a vector is being created having its origin at the initial contact, to determine the instantaneous rotation movement(s) to be provided to the rear-view mirror. Only the angle of that vector is taken into account for the control of the position of the rear-view mirror, not its magnitude.

If the contact of the user's finger with the touch-screen ceases, the rotation movement(s) of the rear-view mirror ceases. If the user makes a new and further initial contact on the second region of the touch-screen, a new coordinate axis is generated and the previous process is repeated.

The rear-view mirrors to which the system of the first aspect of the present invention is designed for are power rear-view mirrors, i.e. rear-view mirrors which rotate by means of power motors which constitute or are operatively connected to the above mentioned actuators.

By means of the above mentioned generation of control signals conditioned to the described sequential detections, the user only has to look at the screen to look for the touch-enabled icon located on the first region, to select the rear-view mirror(s) which position is to be controlled, as once that selection has been made the user has just to touch with his/her finger on any location of the second region of the touch screen to initiate an unguided and free drag motion, without having to look for any icon therein, i.e. without having to keep looking at the screen of the GUI to control the operation of the selected rear-view mirror(s), thus solving the above mentioned problem that the systems of the prior art have.

Depending on the embodiment, the rear-view mirrors comprise exterior left and right side rear-view mirrors and/or at least one inner rear-view mirror.

Also, depending on the embodiment, the GUI is configured to detect the pressure exerted according to the above mentioned drag motion from the initial contact to any further location of the second region and/or of the first region and/or of a further region (such as the third region identified and described below) of the at least one touch-screen.

For one of said embodiments, the GUI is configured to detect the pressure exerted according to the above mentioned drag motion from the initial contact to any further location of the second region of the at least one touch-screen.

According to an embodiment, the GUI is configured to display the above mentioned first region at a first edge area of the touch screen, and the second region on an adjacent area of the touch screen that is at least twice larger than said first edge area, so that the above mentioned objective of minimizing significantly the time that a user must keep looking at the screen to control the operation of the rear-view mirror(s) is met in an even higher degree, as a user who has selected on the first edge area the rear-view mirror(s) which position is to be controlled does not have to keep looking at the screen of the GUI to control the operation of the selected rear-view mirror(s) because as far as he/she performs a drag motion on any location of said adjacent area the desired action of the rear-view mirror(s) is carried out. The rear-view mirror adjustment control screen may be understood as a touchpad or an area of the touch screen with no touch-enabled icons displayed thereon. Thus, the initial contact on the second region can be performed at any location of said second region, minimizing the attention paid by the user to perform the control of the position of the rear-view mirror.

For an implementation of said embodiment, the GUI is configured to display said second region only after the rear-view mirror to be controlled has been selected by a contact on at least one of the touch-enabled icons located on the first region.

For an alternative implementation, the GUI is configured to display said second region even when no rear-view mirror to be controlled has yet been selected, but to block said generation of control signals until the rear-view mirror to be controlled has been selected by a contact on at least one of the touch-enabled icons located on the first region. Therefore, the vehicle rear-view mirror adjustment control system guides the sequence of inputs to be performed by the user, avoiding missuses of said control system.

For another of the above mentioned embodiments, the GUI is configured to detect the pressure exerted according to the above mentioned drag motion from the initial contact to any further location of the second region and also of the first region of the at least one touch-screen, and, if so, to further regions thereof. Hence, if a user is permuting a drag motion form an initial point located at the second region, no matter to which location of the touch-screen the drag motion ends, so that he/she does not need to look at the screen at all and, instead, can keep looking at the rear-view mirror being controlled so that he/she can visually check that its position is adjusted as desired.

For an implementation of said another embodiment, the GUI is configured to display an expanded second region covering the first region only after the rear-view mirror to be controlled has been selected by a contact on at least one of the touch-enabled icons located on the first region, so that the drag motion can go through the expanded second region without activating any touch-enabled icon. If the touch-screen displays further regions (such as the third region identified and described below), preferably, the second region is also expanded to cover said further regions, also only after the rear-view mirror to be controlled has been selected by a contact on at least one of the touch-enabled icons located on the first region.

For an alternative implementation of said embodiment, the GUI is configured to display an expanded second region covering the first region and/or said further regions (such as the third region identified and described below), only after an initial contact on a location of the second region, not expanded yet, has been detected by the GUI. Thus, when the rear-view mirror to be controlled has been selected by a contact on at least one of the touch-enabled icons located on the first region and an initial contact of the drag motion has been detected by a contact on the non-expanded second region, the GUI displays an expansion of the second region, informing the user that the drag motion can be performed through any direction of said expanded second region.

For an alternative implementation of said another embodiment, the GUI is configured to keep displaying the first region but to block the touch-enabled icons located on the first region, enabling the first region as a continuation of the second region, only after the rear-view mirror to be controlled has been selected by a contact on at least one of the touch-enabled icons located on the first region, so that the drag motion can go through the first region without activating any touch-enabled icon displayed thereby. If the touch-screen displays further regions (such as the third region identified and described below) displaying corresponding touch-enabled icons, the GUI is preferably configured to keep displaying the further regions but to block the touch-enabled icons displayed thereby, enabling the further regions as a continuation of the second region, also only after the rear-view mirror to be controlled has been selected by a contact on at least one of the touch-enabled icons located on the first region.

For an alternative implementation of said another embodiment, the GUI is configured to keep displaying the first region but to block the touch-enabled icons located on the first region, enabling the first region and/or further regions (such as the third region identified and described below), as a continuation of the second region, only after an initial contact on a location of the second region has been detected by the GUI. Thus, when the rear-view mirror to be controlled has been selected by a contact on at least one of the touch-enabled icons located on the first region and an initial contact of the drag motion has been detected by a contact on the second region, the GUI is configured to block the touch-enabled icons displayed on the first region and/or on the further regions, enabling said first region and/or said further regions as a continuation of the second region.

By means of said implementations, the user does not have to look at the screen at all once the rear-view mirror to be controlled has been selected, thus reducing the time at which the user must look at the screen to that associated to the selection of the rear-view mirror to be controlled.

According to an embodiment, the computing entity is configured to generate the above mentioned control signals independently of the length and/or speed of the drag motion. Therefore, the generated control signals are only based on the Y and X components of the drag motion, being preferably independent of the length and speed or the drag motion, resulting in a simplified and most efficient control signal generation.

In order to address a problem that could arise if a user performing the above mentioned drag motion reaches an edge of the touch screen before the desired position of the selected rear-view mirror(s) has been achieved, for an embodiment, the computing entity is configured to maintain the generation of the control signals, and their provision to the respective actuators, when the drag motion has stopped (for example at the above mentioned edge of the touch screen, or at any other position) but the exerted pressure has not yet been released, i.e. the user has not released his/her finger from the touch screen.

For a further embodiment, the above mentioned drag motion is a previous drag motion and the computing entity is configured to change the control signal previously generated and their provision to the respective actuators, when the GUI detects on the at least one touch screen a further drag motion that comprises a Y component following the Y dimension and/or a X component following the X dimension, and a direction, for the Y and/or X component, that is opposite to the corresponding direction of the previous drag motion, wherein between the previous drag motion and the further drag motion the exerted pressure has not been released. Due to the maintenance of the exerted pressure between the previous drag motion and the further drag motion, both drag motions are referenced to the same coordinate axis, wherein said coordinate axis has been generated according to the location of the initial contact on the second region detected by the GUI. With this further embodiment, a user which has changed too much the position of a selected rear-view mirror about the first and/or second rotation axis according to a rotation direction, and wants to correct that change by adjusting the position of the selected rear-view mirror about the same rotation axis but in an opposite direction, does not have to release his/her finger from the touch screen and look for another touch-enabled icon, but just perform the above mentioned further drag motion in opposite direction to the previous one. Thus the attention of the user can be paid only to the rear-view mirror to be adjusted, avoiding him/her to alternatively direct his/her glance to the touch screen and the rear-view mirror, while the positioning operation of the rear-view mirror is being performed.

According to a further embodiment, the GUI is configured to display a third region displaying touch-enabled icons identifying desired preset rotating positions for one or more rear-view mirrors, wherein the GUI is configured to detect a contact on said touch-enabled icons identifying desired preset rotating positions, and wherein the computing entity is configured to generate rotating control signals according to the contact detected touch-enabled icon displayed on said third region.

Preferably, the above mentioned desired preset rotating positions are programmable by a user, the GUI and computing entity being configured to program and thus set one or more desired rotating positions when a contact is made, and maintained along a predetermined time, on a location of the touch screen displaying a respective one of the touch-enabled icons displayed on said third region. Alternative manners of programming the desired preset rotating positions are also envisaged by the system of the first aspect of the present invention.

According to an embodiment, the vehicle rear-view mirror adjustment control system of the first aspect of the present invention further comprises one or more position detectors operatively connected to the computing entity and configured and arranged to detect current rotating positions of the rear-view mirrors, the computing entity being configured to set as the desired one or more rotating positions one or more of the corresponding detected current rotating positions.

According to a further embodiment, the GUI is configured to display on the first region the current rotating position state of the rear-view mirrors while being selected, and also to display on the second region the current rotating state of the selected rear-view mirror(s). The current rotating position state is detected by means of the above mentioned position detector(s).

For a further embodiment, a warning signal to be perceived by the user is generated by the computing entity when the rear-view mirror being controlled reaches end of stroke in the selected rotating direction. That warning signal can be visual (for example, displayed on the touch-screen), audible, vibrational, haptic, etc.

The present invention also relates, in a second aspect, to a computer-implemented method, for controlling the position of rear-view mirrors on a vehicle, comprising performing the following steps:
- generating control signals, by means of a computing entity, in response to the detection of a user touching inputs determined by at least one touch screen comprised by a graphical user interface and that is operatively connected to said computing entity; and
- providing said control signals from said computing entity to respective actuators of said rear-view mirrors to control the same to rotate about first and second rotation axes;

wherein the method comprises using said GUI to display in a displaying area of the touch screen having Y and X dimensions:
   - a first region displaying touch-enabled icons, wherein each touch-enabled icon is associated to one of said rear-view mirrors, allowing a user to select a rear-view mirror to be controlled; and
   - a second region displaying a rear-view mirror adjustment control screen associated to the selected rear-view mirror;
wherein the method further comprises sequentially detecting on the at least one touch screen, using the GUI in collaboration with said computing entity:
   - a contact on at least one of the touch-enabled icons located on said first region, to select the rear-view mirror to be controlled;
   - an initial contact on a location of said second region; and
   - a pressure exerted according to a drag motion from an origin constituted by said initial contact;
and wherein the method further comprises the computing entity generating as said control signals rotating control signals, for rotating the selected rear-view mirror about said first and/or rotation axis according to desired rotation directions, that are determined based on the path and direction followed by said drag motion.

In contrast to the methods known in the art, the one of the second aspect of the present invention, in a characterizing manner, comprises detecting said initial contact on any location of the second region, so that any location of the second region is a candidate location for being the origin of said drag motion.

The computer-implemented method of the second aspect of the present invention is adapted to operate the system of the first aspect.

A third aspect of the present invention relates to computer program, comprising code instructions that when executed on one or more processors implement the steps of the method of the second aspect of the invention.

A computer program product comprising a non-transitory computer-readable storage medium with the above mentioned code instructions encoded therein, is also provided by the present invention.

### BRIEF DESCRIPTION OF THE FIGURES

In the following some preferred embodiments of the invention will be described with reference to the enclosed figures. They are provided only for illustration purposes without however limiting the scope of the invention.
Figure 1 schematically shows the system of the first aspect of the present invention, for an embodiment for which the GUI comprises a touch screen preferably located on the dashboard of a vehicle to allow the driver and the front passenger to control the operation of the rear-view mirrors of the vehicle.
Figure 2 schematically shows the GUI of the system of the first aspect of the present invention, for an alternative embodiment.

### DESCRIPTION OF THE PREFERRED EMBODIMENTS

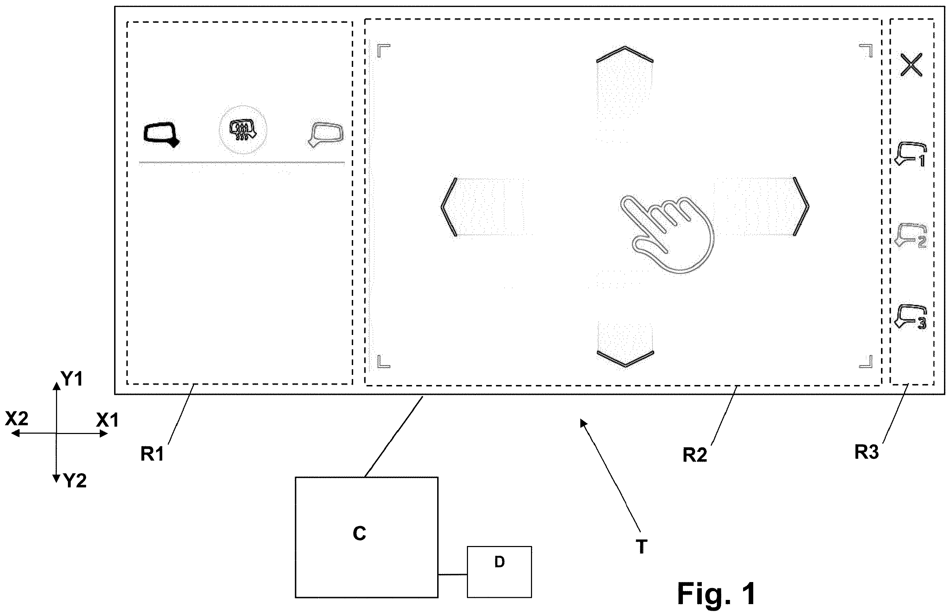

Figure 1 shows an embodiment of the vehicle rear-view mirror adjustment control system of the first aspect of the present invention, for which the system comprises:
- a computing entity C configured to provide control signals to respective actuators of exterior left side and right side rear-view mirrors to control the same to rotate about first and second rotation axes; and
- a graphical user interface GUI comprising a touch screen T operatively connected to the computing entity C, wherein the control signals provided by the computing entity C are generated in response to the detection of a user touching inputs determined by the touch screen T.

As shown in Figure 1, the GUI is configured to display in a displaying area of the touch screen T having Y and X dimensions:
- a first region R1, at a first edge area of the touch screen T, that displays touch-enabled icons, particularly in the form of an exterior left side and an exterior right side rear-view mirrors of the vehicle, wherein each touch-enabled icon is associated to one of the rear-view mirrors, allowing a user to select a rear-view mirror to be controlled; and
- a second region R2, located on an adjacent area of the touch screen T that is at least twice larger than the first edge area, that displays a rear-view mirror adjustment control screen associated to the selected rear-view mirror.

The GUI is configured to sequentially detect, in collaboration with the computing entity C, on the touch screen T:
- a contact on one or more of the touch-enabled icons located on the first region R1, to select the rear-view mirror to be controlled;
- an initial contact on any location of the second region R2; and
- a pressure exerted according to a drag motion from an origin constituted by said initial contact.

Hence, any location of the second region R2 is a candidate location for being the origin of said drag motion.

The computing entity C is configured to generate as above mentioned control signals rotating control signals, for rotating the selected rear-view mirror about said first and/or second rotation axis according to desired rotation directions, that are determined based on the path and direction followed by said drag motion.

The hand depicted in Figure 1 is only for illustrative purposes to represent that second region R2 is where a user must perform the initial contact origin of the drag motion, but such a hand picture does not have to be necessarily displayed by the GUI. The same can be said about the four arrows depicted in Figure 1. They just represent the four possible directions for the drag motion, i.e. X1, X2, Y1, and Y2, but they do not have to be necessarily displayed by the GUI.

For the embodiment illustrated in Figure 1, the computing entity C is configured to generate as the above mentioned control signals:
- a first rotating control signal for rotating the selected rear-view mirror about the first rotation axis according to a first rotation direction, when the drag motion of the detected pressure comprises a X component following the X dimension according to a first direction X1,
- a second rotating control signal for rotating the selected rear-view mirror about the first rotation axis according to a second rotation direction opposite to said first rotation direction, when the drag motion of the detected pressure comprises a X component following said X dimension according to a second direction X2 opposite to said first direction X1,
- a third rotating control signal for rotating the selected rear-view mirror about the second rotation axis according to a third rotation direction, when the drag motion of the detected pressure comprises a Y component following said Y dimension according to a third direction Y1, and
- a fourth rotating control signal for rotating the selected rear-view mirror about the second rotation axis according to a fourth rotation direction opposite to said third rotation direction, when the drag motion of the detected pressure comprises a Y component following said Y dimension according to a fourth direction Y2 opposite to said third direction Y1.

The GUI is configured to detect the pressure exerted according to said drag motion from said initial contact to any further location of the second region R2 and/or of the first region R1 and/or of a further region of the touch-screen T.

The computing entity C is configured to maintain the generation of the control signals, and their provision to the respective actuators, when the drag motion has stopped but the exerted pressure has not yet been released. Therefore, if, for example, a user performs a quick drag motion so that it arrives at an edge of the touch screen T before the rear-view mirror being controlled has arrived to the desired rotating position (due to the fact that the actuator generally has a constant speed), then if the user does not release his/her finger, the rear-view mirror continues rotating up to reaching end of stroke or up to the user releases his/her finger form the touch-screen T.

As shown in Figure 1, the GUI displays a third region R3 located at a second edge area of the touch screen T, that displays touch-enabled icons identifying desired preset rotating positions for one or more rear-view mirrors, wherein the GUI is configured to detect a contact on said touch-enabled icons (depicted as rear-view mirrors numbered with numbers 1, 2, and 3) identifying desired preset rotating positions, and wherein the computing entity C is configured to generate rotating control signals according to the contact detected touch-enabled icon displayed on said third region R3.

Advantageously, the desired preset rotating positions are programmable by a user, the GUI and computing entity C being configured to program and thus set one or more desired rotating positions when a contact is made, and maintained along a predetermined time, on a location of the touch screen T displaying a respective one of the touch-enabled icons displayed on the third region R3. The one or more position detectors D detect and provide to the computing entity C current rotating positions of the rear-view mirrors, so that the computing entity C sets as said desired one or more rotating positions one or more of the corresponding detected current rotating positions.

The GUI is also configured to display on the first region R1 the rotating position state (detected by the position detector(s)) of the rear-view mirrors while being selected, and/or to display on the second region R2 the rotating state of the selected rear-view mirror. For the embodiment of Figure 1, the rotating state of the rear-view mirrors is displayed on the first region R1, particularly by means of slight modifications on the touch-enable icon representing each rear-view mirror.

For the embodiment illustrated by Figure 1, in addition to those touch-enabled icons identifying exterior left side and right side rear-view mirrors, a further touch-enabled icon is displayed in between, on first region R1. That further touch-enabled icon represents an exterior heated rear-view mirror, and its selection by a user activates/deactivates the heater associated thereto.

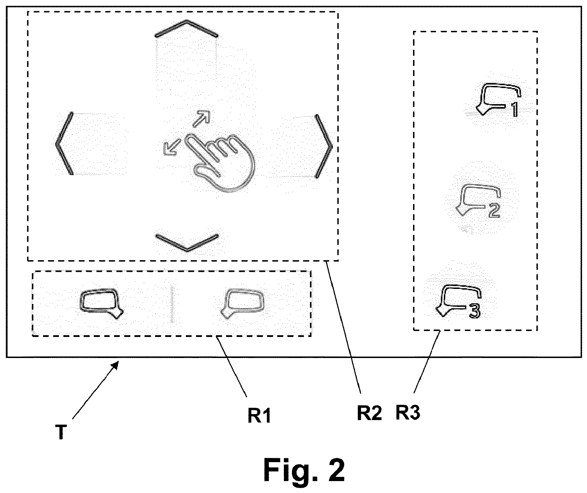

Figure 2 schematically shows a simpler version of the GUI of the system of the first aspect of the present invention, for an embodiment that differs from the one illustrated by Figure 1 in the sizes and locations of first R1, second R2, and third R3 regions, and also in the touch-enable icons displayed therein.

For the embodiment of Figure 2, the first region R1 is placed below the second region R2 and does not display the above mentioned further touch-enabled icon representing the exterior heated rear-view mirror.

A person skilled in the art could introduce changes and modifications in the embodiments described without departing from the scope of the invention as it is defined in the attached claims.

## Claims

1. A vehicle rear-view mirror adjustment control system, configured to control the position of rear-view mirrors on a vehicle, comprising:
- a computing entity (C) configured to provide control signals to respective actuators of said rear-view mirrors to control the same to rotate about first and second rotation axes; and
- a graphical user interface (GUI) comprising at least one touch screen (T) operatively connected to said computing entity (C), wherein the control signals provided by the computing entity (C) are generated in response to the detection of a user touching inputs determined by the at least one touch screen (T);
wherein said GUI is configured to display in a displaying area of the touch screen (T) having Y and X dimensions:
- a first region (R1) displaying touch-enabled icons, wherein each touch-enabled icon is associated to one of said rear-view mirrors, allowing a user to select a rear-view mirror to be controlled; and
- a second region (R2) displaying a rear-view mirror adjustment control screen associated to the selected rear-view mirror;
wherein the GUI is configured to sequentially detect, in collaboration with said computing entity (C), on the at least one touch screen (T):
- a contact on at least one of the touch-enabled icons located on said first region (R1), to select the rear-view mirror to be controlled;
- an initial contact on a location of said second region (R2); and
- pressure exerted on the at least one touch screen (T) according to a drag motion from an origin constituted by said initial contact;
and wherein the computing entity (C) is configured to generate as said control signals rotating control signals, for rotating the selected rear-view mirror about said first and/or second rotation axis according to desired rotation directions, that are determined based on the path and direction followed by said drag motion;
**characterized in that** the GUI is configured to detect said initial contact on any location of the second region (R2), so that any location of the second region (R2) is a candidate location for being the origin of said drag motion;
**in that** the computing entity (C) is configured to generate as said control signals:
- a first rotating control signal for rotating the selected rear-view mirror about said first rotation axis according to a first rotation direction, when the drag motion of the detected pressure comprises a X component following said X dimension according to a first direction (X1),
- a second rotating control signal for rotating the selected rear-view mirror about said first rotation axis according to a second rotation direction opposite to said first rotation direction, when the drag motion of the detected pressure comprises a X component following said X dimension according to a second direction (X2) opposite to said first direction (X1),
- a third rotating control signal for rotating the selected rear-view mirror about said second rotation axis according to a third rotation direction, when the drag motion of the detected pressure comprises a Y component following said Y dimension according to a third direction (Y1), and
- a fourth rotating control signal for rotating the selected rear-view mirror about said second rotation axis according to a fourth rotation direction opposite to said third rotation direction, when the drag motion of the detected pressure comprises a Y component following said Y dimension according to a fourth direction (Y2) opposite to said third direction (Y1);
and **in that** the computing entity (C) is configured to change the control signal previously generated and their provision to said respective actuators, from the first rotating control signal to the second rotating control signal or vice versa, or from the third rotating control signal to the fourth rotating control signal or vice versa, when the GUI detects on the at least one touch screen (T) a further drag motion that comprises a Y component following said Y dimension and/or a X component following said X dimension, and a direction, for the Y and/or X component, that is opposite to the corresponding direction of the drag motion, wherein between the drag motion and the further drag motion the exerted pressure has not been released.

2. A vehicle rear-view mirror adjustment control system, according to claim 1, wherein the GUI is configured to detect said pressure exerted according to said drag motion from said initial contact to any further location of the second region (R2) and/or of the first region (R1) and/or of a further region of the at least one touch-screen (T).

3. A vehicle rear-view mirror adjustment control system, according to claim 2, wherein the GUI is configured to display an expanded second region (R2) covering the first region (R1) only after the rear-view mirror to be controlled has been selected by a contact on the at least one of the touch-enabled icons located on the first region (R1).

4. A vehicle rear-view mirror adjustment control system, according to claim 2, wherein the GUI is configured to keep displaying said first region (R1) but to block the touch-enabled icons located on said first region (R1), enabling the first region (R1) as a continuation of the second region (R2), only after the rear-view mirror to be controlled has been selected by a contact on at least one of the touch-enabled icons located on the first region (R1).

5. A vehicle rear-view mirror adjustment control system according to any of the previous claims, wherein the computing entity (C) is configured to generate said control signals independently of the length and/or of the speed of said drag motion.

6. A vehicle rear-view mirror adjustment control system according to any of the previous claims, wherein the computing entity (C) is configured to maintain the generation of the control signals, and their provision to said respective actuators, when the drag motion has stopped but the exerted pressure has not yet been released.

7. A vehicle rear-view mirror adjustment control system according to any of the previous claims, wherein the GUI is configured to display said first region (R1) at a first edge area of the touch screen (T), and said second region (R2) on an adjacent area of the touch screen (T) that is at least twice larger than said first edge area.

8. A vehicle rear-view mirror adjustment control system according to claim 7, wherein the GUI is configured to display said second region (R2) only after the rear-view mirror to be controlled has been selected by a contact on at least one of the touch-enabled icons located on the first region (R1).

9. A vehicle rear-view mirror adjustment control system according to claim 7, wherein the GUI is configured to display said second region (R2) even when no rear-view mirror to be controlled has yet been selected, but to block said generation of control signals until the rear-view mirror to be controlled has been selected by a contact on at least one of the touch-enabled icons located on the first region (R1).

10. A vehicle rear-view mirror adjustment control system according any of the previous claims, wherein the GUI is configured to display a third region (R3) displaying touch-enabled icons identifying desired preset rotating positions for one or more rear-view mirrors, wherein the GUI is configured to detect a contact on said touch-enabled icons identifying desired preset rotating positions, and wherein the computing entity (C) is configured to generate rotating control signals according to the contact detected touch-enabled icon displayed on said third region (R3).

11. A vehicle rear-view mirror adjustment control system according to any of the previous claims, further comprising at least one position detector (D) operatively connected to the computing entity (C) and configured and arranged to detect current rotating position states of said rear-view mirrors, wherein the GUI is configured to display on said first region (R1) the current rotating position state of the rear-view mirrors while being selected, and/or to display on said second region (R2) the current rotating position state of the selected rear-view mirror.

12. A computer-implemented method, for controlling the position of rear-view mirrors on a vehicle, comprising performing the following steps:
- generating control signals, by means of a computing entity (C), in response to the detection of a user touching inputs determined by at least one touch screen (T) comprised by a graphical user interface (GUI) and that is operatively connected to said computing entity (C); and
- providing said control signals from said computing entity (C) to respective actuators of said rear-view mirrors to control the same to rotate about first and second rotation axes;
wherein the method comprises using said GUI to display in a displaying area of the touch screen (T) having Y and X dimensions:
- a first region (R1) displaying touch-enabled icons, wherein each touch-enabled icon is associated to one of said rear-view mirrors, allowing a user to select a rear-view mirror to be controlled; and
- a second region (R2) displaying a rear-view mirror adjustment control screen associated to the selected rear-view mirror;
wherein the method further comprises sequentially detecting on the at least one touch screen (T), using the GUI in collaboration with said computing entity (C):
- a contact on at least one of the touch-enabled icons located on said first region (R1), to select the rear-view mirror to be controlled;
- an initial contact on a location of said second region (R2); and
- pressure exerted on the at least one touch screen (T) according to a drag motion from an origin constituted by said initial contact;
and wherein the method further comprises the computing entity (C) generating as said control signals rotating control signals, for rotating the selected rear-view mirror about said first and/or rotation axis according to desired rotation directions, that are determined based on the path and direction followed by said drag motion;
**characterized in that** the method comprises detecting said initial contact on any location of the second region (R2), so that any location of the second region (R2) is a candidate location for being the origin of said drag motion;
**in that** the method comprises using the computing entity (C) to generate as said control signals:
- a first rotating control signal for rotating the selected rear-view mirror about said first rotation axis according to a first rotation direction, when the drag motion of the detected pressure comprises a X component following said X dimension according to a first direction (X1),
- a second rotating control signal for rotating the selected rear-view mirror about said first rotation axis according to a second rotation direction opposite to said first rotation direction, when the drag motion of the detected pressure comprises a X component following said X dimension according to a second direction (X2) opposite to said first direction (X1),
- a third rotating control signal for rotating the selected rear-view mirror about said second rotation axis according to a third rotation direction, when the drag motion of the detected pressure comprises a Y component following said Y dimension according to a third direction (Y1), and
- a fourth rotating control signal for rotating the selected rear-view mirror about said second rotation axis according to a fourth rotation direction opposite to said third rotation direction, when the drag motion of the detected pressure comprises a Y component following said Y dimension according to a fourth direction (Y2) opposite to said third direction (Y1);
and **in that** the method comprises using the computing entity (C) to change the control signal previously generated and their provision to said respective actuators, from the first rotating control signal to the second rotating control signal or vice versa, or from the third rotating control signal to the fourth rotating control signal or vice versa, when the GUI detects on the at least one touch screen (T) a further drag motion that comprises a Y component following said Y dimension and/or a X component following said X dimension, and a direction, for the Y and/or X component, that is opposite to the corresponding direction of the drag motion, wherein between the drag motion and the further drag motion the exerted pressure has not been released

13. A computer program, comprising code instructions that when executed by the system of any of claims 1-11 causes said system to implement the steps of the method according to claim 12.

## Patentansprüche

1. Fahrzeugrückspiegeleinstellung-Steuerungssystem, das konfiguriert ist, um die Position von Rückspiegeln an einem Fahrzeug zu steuern, umfassend:
- - eine Recheneinheit (C), die konfiguriert ist, um Steuersignale an entsprechende Aktuatoren der Rückspiegel bereitzustellen, um diese zu steuern, um um eine erste und eine zweite Drehachse zu drehen; und
- eine grafische Benutzeroberfläche (GUI), umfassend mindestens einen Berührungsbildschirm (T), der funktionsfähig mit der Recheneinheit (C) verbunden ist, wobei die von der Recheneinheit (C) bereitgestellten Steuersignale als Reaktion auf die Erfassung von Berührungseingaben eines Benutzers erzeugt werden, die von dem mindestens einen Berührungsbildschirm (T) bestimmt werden;
wobei die GUI konfiguriert ist, um in einem Anzeigebereich des Berührungsbildschirms (T), der Y- und X-Abmessungen aufweist, Folgendes anzuzeigen:
- einen ersten Bereich (R1), der berührungsaktivierte Symbole anzeigt, wobei jedes berührungsaktivierte Symbol mit einem der Rückspiegel assoziiert ist, was es einem Benutzer ermöglicht, einen zu steuernden Rückspiegel auszuwählen; und
- einen zweiten Bereich (R2), der einen Rückspiegeleinstellung-Steuerungsbildschirm anzeigt, der mit dem ausgewählten Rückspiegel assoziiert ist;
wobei die GUI konfiguriert ist, um in Zusammenarbeit mit der Recheneinheit (C) auf dem mindestens einen Berührungsbildschirm (T) sequentiell Folgendes zu erfassen:
- einen Kontakt auf mindestens einem der berührungsaktivierten Symbole, die sich in dem ersten Bereich (R1) befinden, um den zu steuernden Rückspiegel auszuwählen;
- einen anfänglichen Kontakt an einer beliebigen Stelle des zweiten Bereichs (R2); und
- Druck, der entsprechend einer Ziehbewegung ausgehend von einem durch die genannte erste Berührung gebildeten Ursprung auf den mindestens einen Berührungsbildschirm (T) ausgeübt wird;
und wobei die Recheneinheit (C) konfiguriert ist, um als die Steuersignale Drehsteuersignale zum Drehen des ausgewählten Rückspiegels um die erste und/oder zweite Drehachse gemäß gewünschten Drehrichtungen zu erzeugen, die basierend auf dem Weg und der Richtung, denen die Ziehbewegung folgt, bestimmt werden;
**dadurch gekennzeichnet, dass** die GUI konfiguriert ist, um den anfänglichen Kontakt an einer beliebigen Stelle des zweiten Bereichs (R2) zu erkennen, sodass jede Stelle des zweiten Bereichs (R2) ein Kandidat dafür ist, der Ursprung der Ziehbewegung zu sein;
dass die Recheneinheit (C) konfiguriert ist, um als die Steuersignale Folgendes zu erzeugen:
- ein erstes Drehsteuersignal zum Drehen des ausgewählten Rückspiegels um die erste Drehachse gemäß einer ersten Drehrichtung, wenn die Ziehbewegung des erfassten Drucks eine X-Komponente umfasst, die der X-Abmessung gemäß einer ersten Richtung (X1) folgt,
- ein zweites Drehsteuersignal zum Drehen des ausgewählten Rückspiegels um die erste Drehachse gemäß einer zweiten Drehrichtung, die der ersten Drehrichtung entgegengesetzt ist, wenn die Ziehbewegung des erfassten Drucks eine X-Komponente umfasst, die der X-Abmessung gemäß einer zweiten Richtung (X2) entgegengesetzt zu der ersten Richtung (X1) folgt,
- ein drittes Drehsteuersignal zum Drehen des ausgewählten Rückspiegels um die zweite Drehachse gemäß einer dritten Drehrichtung, wenn die Ziehbewegung des erfassten Drucks eine Y-Komponente umfasst, die der Y-Abmessung gemäß einer dritten Richtung (Y1) folgt, und
- ein viertes Drehsteuersignal zum Drehen des ausgewählten Rückspiegels um die zweite Drehachse gemäß einer vierten Drehrichtung, die der dritten Drehrichtung entgegengesetzt ist, wenn die Ziehbewegung des erfassten Drucks eine Y-Komponente umfasst, die der Y-Abmessung gemäß einer vierten Richtung (Y2) entgegengesetzt zu der dritten Richtung (Y1) folgt;
und dass die Recheneinheit (C) konfiguriert ist, um das zuvor erzeugte Steuersignal und dessen Bereitstellung an die jeweiligen Aktuatoren von dem ersten Drehsteuersignal zu dem zweiten Drehsteuersignal oder umgekehrt, oder von dem dritten Drehsteuersignal zu dem vierten Drehsteuersignal oder umgekehrt, zu ändern, wenn die GUI auf dem mindestens einen Berührungsbildschirm (T) eine weitere Ziehbewegung erkennt, die eine Y-Komponente, die der Y-Abmessung folgt, und/oder eine X-Komponente, die der X-Abmessung folgt, und eine Richtung für die Y- und/oder X-Komponente umfasst, die der entsprechenden Richtung der Ziehbewegung entgegengesetzt ist, wobei zwischen der Ziehbewegung und der weiteren Ziehbewegung der ausgeübte Druck nicht aufgehoben wurde.

2. Fahrzeugrückspiegeleinstellung-Steuerungssystem nach Anspruch 1, wobei die GUI konfiguriert ist, um den entsprechend der Ziehbewegung ausgeübten Druck von der anfänglichen Berührung zu einer beliebigen weiteren Stelle des zweiten Bereichs (R2) und/oder des ersten Bereichs (R1) und/oder eines weiteren Bereichs des mindestens einen Berührungsbildschirms (T) zu erfassen.

3. Fahrzeugrückspiegeleinstellung-Steuerungssystem nach Anspruch 2, wobei die grafische Benutzeroberfläche konfiguriert ist, um einen erweiterten zweiten Bereich (R2), der den ersten Bereich (R1) abdeckt, erst dann anzuzeigen, wenn der zu steuernde Rückspiegel durch einen Kontakt mit dem mindestens einen der berührungsaktivierten Symbole, die sich auf dem ersten Bereich (R1) befinden, ausgewählt wurde.

4. Fahrzeugrückspiegeleinstellung-Steuerungssystem nach Anspruch 2, wobei die grafische Benutzeroberfläche konfiguriert ist, um den ersten Bereich (R1) weiterhin anzuzeigen, aber die berührungsaktivierten Symbole, die sich auf dem ersten Bereich (R1) befinden, zu blockieren und den ersten Bereich (R1) als Fortsetzung des zweiten Bereichs (R2) erst dann freizugeben, wenn der zu steuernde Rückspiegel durch einen Kontakt auf mindestens einem der berührungsaktivierten Symbole, die sich auf dem ersten Bereich (R1) befinden, ausgewählt wurde.

5. Fahrzeugrückspiegeleinstellung-Steuerungssystem nach einem der vorherigen Ansprüche, wobei die Recheneinheit (C) konfiguriert ist, um die Steuersignale unabhängig von der Länge und/oder der Geschwindigkeit der Ziehbewegung zu erzeugen.

6. Fahrzeugrückspiegeleinstellung-Steuerungssystem nach einem der vorherigen Ansprüche, wobei die Recheneinheit (C) konfiguriert ist, um die Erzeugung der Steuersignale und deren Bereitstellung für die jeweiligen Aktuatoren aufrechtzuerhalten, wenn die Ziehbewegung zwar angehalten, der ausgeübte Druck jedoch noch nicht aufgehoben wurde.

7. Fahrzeugrückspiegeleinstellung-Steuerungssystem nach einem der vorherigen Ansprüche, wobei die GUI konfiguriert ist, um den ersten Bereich (R1) in einem ersten Randbereich des Berührungsbildschirms (T) und den zweiten Bereich (R2) in einem angrenzenden Bereich des Berührungsbildschirms (T) anzuzeigen, der mindestens doppelt so groß ist wie der erste Randbereich.

8. Fahrzeugrückspiegeleinstellung-Steuerungssystem nach Anspruch 7, wobei die grafische Benutzeroberfläche konfiguriert ist, um den zweiten Bereich (R2) erst dann anzuzeigen, nachdem der zu steuernde Rückspiegel durch eine Berührung mindestens eines der berührungsaktivierten Symbole auf dem ersten Bereich (R1) ausgewählt wurde.

9. Fahrzeugrückspiegeleinstellung-Steuerungssystem nach Anspruch 7, wobei die GUI konfiguriert ist, um den zweiten Bereich (R2) zwar auch dann anzuzeigen, wenn noch kein zu steuernder Rückspiegel ausgewählt wurde, aber die Erzeugung von Steuersignalen zu blockieren, bis der zu steuernde Rückspiegel durch einen Kontakt auf mindestens einem der berührungsaktivierten Symbole, die sich auf dem ersten Bereich (R1) befinden, ausgewählt wurde.

10. Fahrzeugrückspiegeleinstellung-Steuerungssystem nach einem der vorherigen Ansprüche, wobei die GUI konfiguriert ist, um einen dritten Bereich (R3) anzuzeigen, der berührungsaktivierte Symbole anzeigt, die gewünschte voreingestellte Drehpositionen für einen oder mehrere Rückspiegel identifizieren, wobei die GUI konfiguriert ist, um einen Kontakt auf den berührungsaktivierten Symbolen zu erkennen, die gewünschte voreingestellte Drehpositionen identifizieren, und wobei die Recheneinheit (C) konfiguriert ist, um Drehsteuersignale entsprechend dem berührungserkannten berührungsaktivierten Symbol zu erzeugen, das auf dem dritten Bereich (R3) angezeigt wird.

11. Fahrzeugrückspiegeleinstellung-Steuerungssystem nach einem der vorherigen Ansprüche, ferner umfassend mindestens einen Positionsdetektor (D), der funktionsfähig mit der Recheneinheit (C) verbunden und konfiguriert und angeordnet ist, um aktuelle Drehpositionszustände der Rückspiegel zu erfassen, wobei die GUI konfiguriert ist, um auf dem ersten Bereich (R1) den aktuellen Drehpositionszustand der Rückspiegel anzuzeigen, während sie ausgewählt sind, und/oder um auf dem zweiten Bereich (R2) den aktuellen Drehpositionszustand des ausgewählten Rückspiegels anzuzeigen.

12. Computerimplementiertes Verfahren zum Steuern der Position von Rückspiegeln an einem Fahrzeug, umfassend eine Ausführen der folgenden Schritte:
- Erzeugen von Steuersignalen mittels einer Recheneinheit (C) als Reaktion auf die Erfassung von Eingaben eines Benutzers, die von mindestens einem Berührungsbildschirm (T) bestimmt werden, der aus einer grafischen Benutzeroberfläche (GUI) besteht und der funktionsfähig mit der Recheneinheit (C) verbunden ist; und
- Bereitstellen der Steuersignale von der Recheneinheit (C) an entsprechende Aktuatoren der Rückspiegel, um diese zu steuern, um um eine erste und eine zweite Drehachse zu drehen;
- wobei das Verfahren ein Verwenden der GUI zum Anzeigen von Folgendem in einem Anzeigebereich des Berührungsbildschirms (T), der Y- und X-Abmessungen aufweist, umfasst:
- einen ersten Bereich (R1), der berührungsaktivierte Symbole anzeigt, wobei jedes berührungsaktivierte Symbol mit einem der Rückspiegel assoziiert ist, was es einem Benutzer ermöglicht, einen zu steuernden Rückspiegel auszuwählen; und
- einen zweiten Bereich (R2), der einen Rückspiegeleinstellung-Steuerungsbildschirm anzeigt, der mit dem ausgewählten Rückspiegel assoziiert ist;
wobei das Verfahren ferner ein sequentielles Erfassen auf dem mindestens einen Berührungsbildschirm (T) unter Verwendung des GUI in Zusammenarbeit mit der Recheneinheit (C) von Folgendem umfasst:
- einen Kontakt auf mindestens einem der berührungsaktivierten Symbole, die sich in dem ersten Bereich (R1) befinden, um den zu steuernden Rückspiegel auszuwählen;
- einen anfänglichen Kontakt an einer beliebigen Stelle des zweiten Bereichs (R2); und
- Druck, der entsprechend einer Ziehbewegung ausgehend von einem durch die genannte erste Berührung gebildeten Ursprung auf den mindestens einen Berührungsbildschirm (T) ausgeübt wird;
und wobei das Verfahren ferner umfasst, dass die Recheneinheit (C) als die Steuersignale Drehsteuersignale zum Drehen des ausgewählten Rückspiegels um die erste und/oder die Drehachse gemäß gewünschten Drehrichtungen erzeugt, die basierend auf dem Weg und der Richtung, denen die Ziehbewegung folgt, bestimmt werden;
**dadurch gekennzeichnet, dass** das Verfahren ein Erfassen des Anfangskontakts an einer beliebigen Stelle des zweiten Bereichs (R2) umfasst, sodass jede Stelle des zweiten Bereichs (R2) ein Kandidat dafür ist, der Ursprung der Ziehbewegung zu sein; dass das Verfahren ein Verwenden der Recheneinheit (C) zum Erzeugen der Steuersignale umfasst:
- ein erstes Drehsteuersignal zum Drehen des ausgewählten Rückspiegels um die erste Drehachse gemäß einer ersten Drehrichtung, wenn die Ziehbewegung des erfassten Drucks eine X-Komponente umfasst, die der X-Abmessung gemäß einer ersten Richtung (X1) folgt,
- ein zweites Drehsteuersignal zum Drehen des ausgewählten Rückspiegels um die erste Drehachse gemäß einer zweiten Drehrichtung, die der ersten Drehrichtung entgegengesetzt ist, wenn die Ziehbewegung des erfassten Drucks eine X-Komponente umfasst, die der X-Abmessung gemäß einer zweiten Richtung (X2) entgegengesetzt zu der ersten Richtung (X1) folgt,
- ein drittes Drehsteuersignal zum Drehen des ausgewählten Rückspiegels um die zweite Drehachse gemäß einer dritten Drehrichtung, wenn die Ziehbewegung des erfassten Drucks eine Y-Komponente umfasst, die der Y-Abmessung gemäß einer dritten Richtung (Y1) folgt, und
- ein viertes Drehsteuersignal zum Drehen des ausgewählten Rückspiegels um die zweite Drehachse gemäß einer vierten Drehrichtung, die der dritten Drehrichtung entgegengesetzt ist, wenn die Ziehbewegung des erfassten Drucks eine Y-Komponente umfasst, die der Y-Abmessung gemäß einer vierten Richtung (Y2) entgegengesetzt zu der dritten Richtung (Y1) folgt;
und dass das Verfahren ein Verwenden der Recheneinheit (C) umfasst, um das zuvor erzeugte Steuersignal und dessen Bereitstellung an die jeweiligen Aktuatoren von dem ersten Drehsteuersignal zu dem zweiten Drehsteuersignal oder umgekehrt, oder von dem dritten Drehsteuersignal zu dem vierten Drehsteuersignal oder umgekehrt, zu ändern, wenn die GUI auf dem mindestens einen Berührungsbildschirm (T) eine weitere Ziehbewegung erkennt, die eine Y-Komponente, die der Y-Abmessung folgt, und/oder eine X-Komponente, die der X-Abmessung folgt, und eine Richtung für die Y- und/oder X-Komponente umfasst, die der entsprechenden Richtung der Ziehbewegung entgegengesetzt ist, wobei zwischen der Ziehbewegung und der weiteren Ziehbewegung der ausgeübte Druck nicht aufgehoben wurde.

13. Computerprogramm, umfassend Codeanweisungen, die bei Ausführung durch das System nach einem der Ansprüche 1 bis 11 das System veranlassen, die Schritte des Verfahrens nach Anspruch 12 zu implementieren.

## Revendications

1. Système de commande de réglage de rétroviseurs de véhicule, configuré de manière à commander la position des rétroviseurs d'un véhicule, comprenant :
- une entité informatique (C) configurée de manière à fournir des signaux de commande à des actionneurs respectifs desdits rétroviseurs afin de commander lesdits rétroviseurs de manière à les faire tourner autour d'un premier axe de rotation et d'un deuxième axe de rotation ; et
- une interface utilisateur graphique (GUI) comprenant au moins un écran tactile (T) connecté fonctionnellement à ladite entité informatique (C), dans lequel les signaux de commande fournis par l'entité informatique (C) sont générés en réponse à la détection d'un effleurement, par un utilisateur, d'entrées déterminées par ledit au moins un écran tactile (T) ;
dans laquelle ladite interface GUI est configurée de manière à s'afficher dans une zone d'affichage de l'écran tactile (T) présentant des dimensions Y et X, à savoir :
- une première région (R1) affichant des icônes tactiles, dans lesquelles chaque icône tactile est associée à l'un desdits rétroviseurs, ce qui permet à un utilisateur de sélectionner un rétroviseur à commander ; et
- une deuxième région (R2) affichant un écran de commande de réglage de rétroviseurs associé au rétroviseur sélectionné ;
dans laquelle l'interface GUI est configurée de manière à détecter séquentiellement, en collaboration avec ladite entité informatique (C), sur ledit au moins un écran tactile (T) :
- un contact sur au moins l'une des icônes tactiles situées sur ladite première région (R1), pour sélectionner le rétroviseur à commander ;
- un contact initial sur un emplacement de ladite deuxième région (R2) ; et
- une pression exercée sur ledit au moins un écran tactile (T) selon un mouvement de glisser à partir d'une origine constituée par ledit contact initial ; et
dans laquelle l'entité informatique (C) est configurée de manière à générer, en tant que lesdits signaux de commande, des signaux de commande de rotation, pour faire tourner le rétroviseur sélectionné autour du premier axe de rotation et/ou du deuxième axe de rotation, selon des directions de rotation souhaitées, lesquelles sont déterminées sur la base de la trajectoire et de la direction suivies par ledit mouvement de glisser ;
**caractérisé en ce que** l'interface GUI est configurée de manière à détecter ledit contact initial à un emplacement quelconque de la deuxième région (R2), de sorte qu'un emplacement quelconque de la deuxième région (R2) est un emplacement candidat en ce qui concerne l'origine dudit mouvement de glisser ;
**en ce que** l'entité informatique (C) est configurée de manière à générer, en tant que lesdits signaux de commande :
- un premier signal de commande de rotation destiné à faire tourner le rétroviseur sélectionné autour dudit premier axe de rotation selon une première direction de rotation, lorsque le mouvement de glisser de la pression détectée comprend une composante X suivant ladite dimension X selon une première direction (X1) ;
- un deuxième signal de commande de rotation destiné à faire tourner le rétroviseur sélectionné autour dudit premier axe de rotation selon une deuxième direction de rotation opposée à ladite première direction de rotation, lorsque le mouvement de glisser de la pression détectée comprend une composante X suivant ladite dimension X selon une deuxième direction (X2) opposée à ladite première direction (X1) ;
- un troisième signal de commande de rotation destiné à faire tourner le rétroviseur sélectionné autour dudit deuxième axe de rotation selon une troisième direction de rotation, lorsque le mouvement de glisser de la pression détectée comprend une composante Y suivant ladite dimension Y selon une troisième direction (Y1) ; et
- un quatrième signal de commande de rotation destiné à faire tourner le rétroviseur sélectionné autour dudit deuxième axe de rotation selon une quatrième direction de rotation opposée à ladite troisième direction de rotation, lorsque le mouvement de glisser de la pression détectée comprend une composante Y suivant ladite dimension Y selon une quatrième direction (Y2) opposée à ladite troisième direction (Y1) ; et
**en ce que** l'entité informatique (C) est configurée de manière à modifier le signal de commande précédemment généré et sa fourniture auxdits actionneurs respectifs, en passant du premier signal de commande de rotation au deuxième signal de commande de rotation, ou vice versa, ou du troisième signal de commande de rotation au quatrième signal de commande de rotation, ou vice versa, lorsque l'interface GUI détecte, sur ledit au moins un écran tactile (T), un mouvement de glisser supplémentaire qui comprend une composante Y suivant ladite dimension Y et/ou une composante X suivant ladite dimension X, et une direction, pour la composante Y et/ou X, qui est opposée à la direction correspondante du mouvement de glisser, dans laquelle, entre le mouvement de glisser et le mouvement de glisser supplémentaire, la pression exercée n'a pas été relâchée.

2. Système de commande de réglage de rétroviseurs de véhicule selon la revendication 1, dans lequel l'interface GUI est configurée de manière à détecter ladite pression exercée selon ledit mouvement de glisser, depuis ledit contact initial jusqu'à tout emplacement supplémentaire de la deuxième région (R2) et/ou de la première région (R1) et/ou d'une région supplémentaire dudit au moins un écran tactile (T).

3. Système de commande de réglage de rétroviseurs de véhicule selon la revendication 2, dans lequel l'interface GUI est configurée de manière à afficher une deuxième région élargie (R2) couvrant la première région (R1) uniquement après que le rétroviseur à commander a été sélectionné par un contact sur au moins une des icônes tactiles situées sur la première région (R1).

4. Système de commande de réglage de rétroviseurs de véhicule selon la revendication 2, dans lequel l'interface GUI est configurée de manière à continuer à afficher ladite première région (R1), mais à bloquer les icônes tactiles situées sur ladite première région (R1), ce qui permet à la première région (R1) d'être une continuation de la deuxième région (R2), uniquement après que le rétroviseur à commander a été sélectionné par un contact sur au moins une des icônes tactiles situées sur la première région (R1).

5. Système de commande de réglage de rétroviseurs de véhicule selon l'une quelconque des revendications précédentes, dans lequel l'entité informatique (C) est configurée de manière à générer lesdits signaux de commande indépendamment de la longueur et/ou de la vitesse dudit mouvement de glisser.

6. Système de commande de réglage de rétroviseurs de véhicule selon l'une quelconque des revendications précédentes, dans lequel l'entité informatique (C) est configurée de manière à maintenir la génération des signaux de commande, et leur fourniture aux actionneurs respectifs, lorsque le mouvement de glisser s'est arrêté, mais que la pression exercée n'a pas encore été relâchée.

7. Système de commande de réglage de rétroviseurs de véhicule selon l'une quelconque des revendications précédentes, dans lequel l'interface GUI est configurée de manière à afficher ladite première région (R1) sur une première zone de bord de l'écran tactile (T), et ladite deuxième région (R2) sur une zone adjacente de l'écran tactile (T), laquelle est au moins deux fois plus grande que ladite première zone de bord.

8. Système de commande de réglage de rétroviseurs de véhicule selon la revendication 7, dans lequel l'interface GUI est configurée de manière à afficher ladite deuxième région (R2) uniquement après que le rétroviseur à commander a été sélectionné par un contact sur au moins l'une des icônes tactiles situées sur la première région (R1).

9. Système de commande de réglage de rétroviseurs de véhicule selon la revendication 7, dans lequel l'interface GUI est configurée de manière à afficher ladite deuxième région (R2) y compris lorsqu'aucun rétroviseur à commander n'a encore été sélectionné, mais à bloquer ladite génération de signaux de commande jusqu'à ce que le rétroviseur à commander ait été sélectionné par un contact sur au moins l'une des icônes tactiles situées sur la première région (R1).

10. Système de commande de réglage de rétroviseurs de véhicule selon l'une quelconque des revendications précédentes, dans lequel l'interface GUI est configurée de manière à afficher une troisième région (R3) affichant des icônes tactiles identifiant les positions de rotation prédéfinies souhaitées pour un ou plusieurs rétroviseurs, dans lequel l'interface GUI est configurée de manière à détecter un contact sur lesdites icônes tactiles identifiant des positions de rotation prédéfinies souhaitées, et dans lequel l'entité informatique (C) est configurée de manière à générer des signaux de commande de rotation selon l'icône tactile détectée affichée sur ladite troisième région (R3).

11. Système de commande de réglage de rétroviseurs de véhicule selon l'une quelconque des revendications précédentes, comprenant en outre au moins un détecteur de position (D) connecté fonctionnellement à l'entité informatique (C) et configuré et agencé de manière à détecter des états de position de rotation en cours desdits rétroviseurs, dans lequel l'interface GUI est configurée de manière à afficher, sur ladite première région (R1), l'état de position de rotation en cours des rétroviseurs en cours de sélection, et/ou à afficher, sur ladite deuxième région (R2), l'état de position de rotation en cours du rétroviseur sélectionné.

12. Procédé mis en oeuvre par ordinateur, pour commander la position de rétroviseurs sur un véhicule, le procédé comprenant la mise en oeuvre des étapes ci-dessous consistant à :
- générer des signaux de commande, au moyen d'une entité informatique (C), en réponse à la détection d'un effleurement, effectué par un utilisateur, d'entrées déterminées par au moins un écran tactile (T) constitué par une interface utilisateur graphique (GUI) et qui est connecté fonctionnellement à ladite entité informatique (C) ; et
- fournir lesdits signaux de commande, de ladite entité informatique (C) à des actionneurs respectifs desdits rétroviseurs, afin de faire tourner lesdits rétroviseurs autour d'un premier axe de rotation et d'un deuxième axe de rotation ;
dans lequel le procédé comprend l'étape consistant à utiliser ladite interface GUI pour afficher, dans une zone d'affichage de l'écran tactile (T) présentant des dimensions Y et X :
- une première région (R1) affichant des icônes tactiles, dans lesquelles chaque icône tactile est associée à l'un desdits rétroviseurs, ce qui permet à un utilisateur de sélectionner un rétroviseur à commander ; et
- une deuxième région (R2) affichant un écran de commande de réglage de rétroviseurs associé au rétroviseur sélectionné ;
dans lequel le procédé comprend en outre l'étape consistant à détecter séquentiellement, sur ledit au moins un écran tactile (T), au moyen de l'interface GUI en collaboration avec ladite entité informatique (C) :
- un contact sur au moins l'une des icônes tactiles situées sur ladite première région (R1), pour sélectionner le rétroviseur à commander ;
- un contact initial sur un emplacement de ladite deuxième région (R2) ; et
- une pression exercée sur ledit au moins un écran tactile (T) selon un mouvement de glisser à partir d'une origine constituée par ledit contact initial ; et
dans lequel le procédé comprend en outre l'étape dans laquelle l'entité informatique (C) génère, en tant que lesdits signaux de commande, des signaux de commande de rotation, pour faire tourner le rétroviseur sélectionné autour du premier axe de rotation et/ou du deuxième axe de rotation, selon des directions de rotation souhaitées, lesquelles sont déterminées sur la base de la trajectoire et de la direction suivies par ledit mouvement de glisser ;
**caractérisé en ce que** le procédé comprend l'étape consistant à détecter ledit contact initial à un quelconque emplacement de la deuxième région (R2), de sorte qu'un emplacement quelconque de la deuxième région (R2) est un emplacement candidat en ce qui concerne l'origine dudit mouvement de glisser ;
**en ce que** le procédé comprend l'étape consistant à utiliser l'entité informatique (C) pour générer, en tant que lesdits signaux de commande :
- un premier signal de commande de rotation destiné à faire tourner le rétroviseur sélectionné autour dudit premier axe de rotation selon une première direction de rotation, lorsque le mouvement de glisser de la pression détectée comprend une composante X suivant ladite dimension X selon une première direction (X1) ;
- un deuxième signal de commande de rotation destiné à faire tourner le rétroviseur sélectionné autour dudit premier axe de rotation selon une deuxième direction de rotation opposée à ladite première direction de rotation, lorsque le mouvement de glisser de la pression détectée comprend une composante X suivant ladite dimension X selon une deuxième direction (X2) opposée à ladite première direction (X1) ;
- un troisième signal de commande de rotation destiné à faire tourner le rétroviseur sélectionné autour dudit deuxième axe de rotation selon une troisième direction de rotation, lorsque le mouvement de glisser de la pression détectée comprend une composante Y suivant ladite dimension Y selon une troisième direction (Y1) ; et
- un quatrième signal de commande de rotation destiné à faire tourner le rétroviseur sélectionné autour dudit deuxième axe de rotation selon une quatrième direction de rotation opposée à ladite troisième direction de rotation, lorsque le mouvement de glisser de la pression détectée comprend une composante Y suivant ladite dimension Y selon une quatrième direction (Y2) opposée à ladite troisième direction (Y1) ; et
**en ce que** le procédé comprend l'étape consistant à utiliser l'entité informatique (C) pour modifier le signal de commande précédemment généré et sa fourniture auxdits actionneurs respectifs, en passant du premier signal de commande de rotation au deuxième signal de commande de rotation, ou vice versa, ou du troisième signal de commande de rotation au quatrième signal de commande de rotation, ou vice versa, lorsque l'interface GUI détecte, sur ledit au moins un écran tactile (T), un mouvement de glisser supplémentaire qui comprend une composante Y suivant ladite dimension Y et/ou une composante X suivant ladite dimension X, et une direction, pour la composante Y et/ou X, qui est opposée à la direction correspondante du mouvement de glisser, dans laquelle, entre le mouvement de glisser et le mouvement de glisser supplémentaire, la pression exercée n'a pas été relâchée.

13. Programme informatique, comprenant des instructions de code qui, lorsqu'elles sont exécutées par le système selon l'une quelconque des revendications 1 à 11, amènent ledit système à mettre en oeuvre les étapes du procédé selon la revendication 12.
